# EUROPÄISCHE PATENTANMELDUNG

(11) **EP 2 056 086 A1**
(43) Veröffentlichungstag der Anmeldung: **06.05.2009**
(21) Anmeldenummer: 07021502.5
(22) Anmeldetag: 05.11.2007
(51) Int. Cl.: G01L 1/24, G01L 5/16

(54) **Kraft-Momenten-Sensor**

(71) Anmelder: Technische Universität München, 80333 München (DE)
(72) Erfinder: Müller, Mathias, 80333 München (DE); Hoffmann, Lars, 80796 München (DE); Lautenschlager, Tobias, 82194 Gröbenzell (DE); Koch, Alexander W., Prof., 80538 München (DE)
(74) Vertreter: Vossius & Partner

(57) **Zusammenfassung**

Die vorliegende Erfindung stellt einen Kraft-Momenten-Sensor zum Messen von mindestens einer Kraft und/oder einem Moment bereit, der einen ersten Teil, einen zweiten Teil und eine dazwischen angeordnete optische Faser aufweist, die an mindestens einem Abschnitt ein Mittel zur Erfassung von Deformationen und/oder Spannungen der Faser transversal zu deren Längsachse aufweist. Die vorliegende Erfindung betrifft ferner ein Verfahren zum Messen von Kräften und/oder Momenten. Demnach wird eine Faser mit mindestens einem Mittel zur Erfassung von Deformationen und/oder Spannungen der Faser transversal zu einer Längsachse der Faser bereitgestellt, in die Licht eingeleitet wird. Entsprechend dem Verfahren wirkt dann eine Kraft und/oder eine Moment auf die Faser, wobei mindestens eine Komponente der Kraft und/oder des Moments senkrecht zur Längsachse der Faser wirkt. Das in der Faser reflektierte Licht wird dann detektiert und das detektierte Spektrum analysiert.

## Beschreibung

Die Erfindung betrifft einen Kraft-Momenten-Sensor zum Messen von Kräften und/oder Momenten unter Verwendung einer optischen Faser sowie ein entsprechendes Verfahren zum Messen von Kräften und/oder Momenten.

Sensoren, die Kräfte bzw. Momente messen können, finden in den unterschiedlichsten technischen Gebieten Verwendung. Derlei Sensoren können üblicherweise an einer Einspannstelle sowohl die angreifende Kraft als auch das Moment in Betrag und Richtung erfassen. Dabei ist es zunehmend von Bedeutung, solche Sensoren möglichst klein und leicht dimensionieren zu können, um einen möglichst flexiblen Einsatz zu garantieren. In vielen Bereichen der Technik, insbesondere in der Bauteilüberwachung, Beanspruchungsanalyse, Robotik und Bionik, aber zum Beispiel auch in der Medizintechnik ist man sowohl auf präzise als auch miniaturisierte Sensoren angewiesen.

Typischerweise werden Kraftmomentensensoren durch mechanische Strukturen realisiert, die die angreifenden Kräfte und Momente in Dehnungen in der Struktur umsetzen, welche dann beispielsweise mittels sogenannter Dehnungsmessstreifen erfasst werden können. Solche Dehnungsmessstreifen bedienen sich dabei häufig des Effekts, dass der elektrische Widerstand von bestimmten Halbleitern oder Konstantanfolien von deren Dehnungszustand abhängt. Piezoelektrische und kapazitive Methoden werden auch verwendet.

Um dabei Kräfte und Momente in jeweils drei zueinander orthogonalen Richtungen messen zu können, bedarf es einer entsprechenden dreidimensionalen geometrischen Struktur. Eine bekannte Struktur ist zum Beispiel die sogenannte "Stewart platform", wie sie als beispielhafte Ausführungsform in der DE 102 17 018 A1 unter Verwendung von Dehnungsmessstreifen beschrieben ist.

Darüber hinaus ist es bekannt, dass auch sogenannte Faser-Bragg-Gitter zur Dehnungsmessung eingesetzt werden können. Faser-Bragg-Gitter werden auch als optischer "Ersatz" für Dehnungsmessstreifen bezeichnet. Hierzu wird Licht in eine optische Faser oder Lichtleitfaser eingekoppelt, die an einer oder mehreren Stellen mit Faser-Bragg-Gittern versehen ist. Der optische Interferenz-Effekt innerhalb der optischen Faser wird üblicherweise dadurch erzielt, dass der Brechungsindex des Faserkerns im Bereich des Faser-Bragg-Gitters periodisch moduliert wird. Man macht sich leicht klar, dass eine Dehnung der Faser entlang der optischen Achse dazu führt, dass die Periode dieser Brechungsindexmodulation variiert wird. Folglich lässt sich aus dem Spektrum des reflektierten Lichts Aufschluss darüber gewinnen, wie stark die Faser an der Stelle des Faser-Bragg-Gitters gedehnt oder gestaucht ist. Ferner lassen sich auf einfache Weise mehrere Faser-Bragg-Gitter in eine optische Faser integrieren. Hierzu wird die (ungedehnte) Modulationsperiode der einzelnen Gitter vorzugsweise unterschiedlich gewählt. Dadurch lassen sich bestimmte Spektralbereiche entsprechenden Gittern und somit entsprechenden Positionen innerhalb des Faser, also des Sensors, zuordnen. Die Sensoren sind bzw. die Faser ist also vorzugsweise spektral codiert, so dass die Sensorsignale, also das an den einzelnen Gittern reflektierte Licht, sich nicht überschneiden. Somit können die Signale der einzelnen Gitter einfach voneinander getrennt und ausgewertet werden.

Die Verwendung von Faser-Bragg-Gittern in einem Multikomponenten-Kraftsensor ist zum Beispiel in A. Fernandez-Fernandez et al., "Mulit-component force sensor based on multiplexed fibre Bragg grating strain sensors"; Measurement Science and Technology 12, 1-4 (2001) beschrieben.

Unabhängig von der Verwendung der entsprechenden mechanischen, elektrischen oder optischen Effekte ist es jedoch ein Problem herkömmlicher Sensoren, dass die beschriebene dreidimensionale Struktur etwa der "Stewart platform" eine gewisse, schwer zu unterbietende Größe, insbesondere Höhe, voraussetzt. Insbesondere erfordert die bekannte Anbringung bzw. Verwendung der Dehnungssensoren, dass die Messrichtung wenigstens eines dieser Sensoren anteilmäßig in die Richtung jeder/s zu messenden Kraft/Momenets zeigt, was eine nachteilige räumliche Ausdehnung des Sensors bedingt. Ferner sind bei bekannten Sensoren der Steifigkeit strukturinhärent Grenzen gesetzt. Zudem verlangt die Konstruktion derartiger Sensoren, beispielsweise einer "Stewart platform", eine außergewöhnlich präzise Verarbeitung von Metallkomponenten. Das macht die Konstruktion und Produktion derlei Sensoren aufwendig und teuer.

Es ist demnach eine Aufgabe der vorliegenden Erfindung, einen verbesserten Kraft-Momenten-Sensor zum Messen von Kräften und/oder Momenten bereitzustellen, der die erwähnten Nachteile zumindest teilweise beseitigt bzw. minimiert. Diese Aufgabe wird durch einen Sensor mit den Merkmalen der unabhängigen Ansprüche gelöst. In den abhängigen Ansprüchen sind bevorzugte Ausführungsformen des erfindungsgemäßen Sensors beschrieben.

Der vorliegenden Erfindung liegt demnach insbesondere der Gedanke zugrunde, sich zur Bestimmung der Kraft- und/oder Momenten-Komponenten mittels optischer Fasern die Deformation bzw. Spannung der optischen Fasern entlang einer Transversalrichtung, d.h. senkrecht zur Faserachse, zu Nutze zu machen. Dadurch lassen sich beispielsweise Sensorkomponenten in einer Ebene im wesentlichen flächig anordnen, wodurch unter anderem die Maße des Sensors in einer Dimension und/oder seine Steifigkeit deutlich verringert werden können.

Die vorliegende Erfindung stellt einen Kraft-Momenten-Sensor zum Messen von mindestens einer Kraft und/oder einem Moment bereit, der einen ersten Teil, einen zweiten Teil und eine dazwischen angeordnete optische Faser aufweist, die an mindestens einem Abschnitt ein Mittel zur Erfassung von Deformationen und/oder Spannungen der Faser transversal zu deren Längsachse aufweist.

Bevorzugt ist das Mittel zur Erfassung von Deformationen der optischen Faser dazu geeignet, aufeinander orthogonale Kräfte und/oder Momente bzw. deren Komponenten transversal zur Längsachse der Faser unabhängig voneinander zu messen. Dafür eignet sich zum Beispiel ein Faser-Bragg-Gitter, bei dem ein optischer Interferenz-Effekt innerhalb der optischen Faser dadurch erzielt wird, dass der Brechungsindex des Faserkerns bei der Herstellung periodisch moduliert wird. Die Periode dieser Modulation kann nicht nur, wie eingangs beschrieben, durch Strecken oder Stauchen der Faser entlang ihrer optischen Achse bzw. Länge variiert werden, sondern auch durch transversale Deformationen, d.h. senkrecht zur Längsachse, manipuliert werden. Allerdings wird im Falle transversaler Dehnungen die Periode in erster Linie dadurch verändert, dass diese Dehnung eine Veränderung des Brechungsindex zur Folge hat, wobei die räumliche Periode vorzugsweise nicht verändert wird. Die Brechzahl wird durch transversale Dehnungen beeinflusst und erzeugt dann eine Polarisationsabhängigkeit.

Solche transversalen Deformationen können Kompression, Scherung, Dehnung, Stauchung oder dergleichen sein. Man spricht auch allgemein von Dehnungen und Gleitungen. Außerdem können Spannungen ebenfalls einen Einfluss auf die optischen Eigenschaften, z.B. auf den Brechungsindex, haben, was ebenfalls eine Variation der Modulationsperiode bewirkt. Demzufolge lässt sich beispielsweise mittels einer Spektralanalyse des reflektierten Lichtes auf den Deformations- bzw. Spannungszustand der Faser in dem entsprechenden Abschnitt rückschließen.

Die Deformations- bzw. Dehnungsmessung beruht vorzugsweise zum einen auf der Änderung der Periode an dem Abschnitt, beispielsweise des Faser-Bragg-Gitters, das man sich wie ein Kristallgitter entlang der Faserachse vorstellen kann. Dehnt sich die Faser, so dehnt sich auch das Gitter. Die Wellenlänge des zurückgeworfenen Lichtes ändert sich als eine Funktion des Gitterabstandes. Ein zweiter bevorzugter Effekt ist die Änderung des Brechungsindex des Materials, aus dem die Faser hergestellt ist. Dehnt man es, so ändert sich die Brechzahl bzw. der Brechungsindex, somit die Wellenlänge im Material und dadurch die "optische Periode" des Gitters.

Belastet man ein Faser-Bragg-Gitter mit einer Dehnung, die transversal zur Faserachse ist, so ändert sich die Gitterperiode vorzugsweise nur durch die Querdehnung des Materials. Zudem tritt eine Änderung der Brechzahl auf. Da die Brechzahl, die das Licht erfährt, beispielsweise auch noch abhängig von der Richtung der Polarisation des Lichtes ist, lässt sich vorzugsweise über die Auswertung der Polarisation des Lichtes zusammen mit dem Spektrum auf die Dehnungsrichtung und deren Größe schließen.

Vorzugsweise wird eine Lichtleitfaser mit eingeschriebenen Faser-Bragg-Gittern als Dehnungssensoren verwendet. Dabei werden die Faser-Bragg-Gitter jedoch vorzugsweise nicht, wie üblich, entlang der Achse der Faser belastet, was beim Einsatz als herkömmlicher Dehnungssensor der Fall ist, sondern die Dehnung wird vorzugsweise quer zu Faserachse bestimmt. Zudem wird vorzugsweise nicht nur die transversale Dehnung in eine Richtung bestimmt, sondern durch Auswerten der Polarisation des Lichtes, das vom Faser-Bragg-Gitter zurückgeworfen wird, erfolgt vorzugsweise auch eine Bestimmung der Richtung der transversalen Dehnungskomponenten.

Hiermit kann insbesondere vermieden werden, dass die Sensorachse auch in die jeweiligen Kraftachsen gerichtet werden muss. Somit kann die minimale Höhe der bisherigen Kraft-Momenten-Sensor-Konstruktionen unterschritten werden. Durch diese Art von Aufbau wird zudem die Steifigkeit des Sensors erhöht.

Vorzugsweise wird zur besseren Unterscheidung der beiden Polarisationsrichtungen eine polarisationserhaltende Faser mit Faser-Bragg-Gittern eingesetzt. Sie dient vorzugsweise lediglich dazu, die Polarisation des Lichtes bis zur Sensorstelle und zurück zu kontrollieren.

Um eine geeignete Übertragung der Kräfte bzw. Momente, die auf den Sensor wirken, auf die optische Faser zu gewährleisten, ist der Abschnitt, der das Mittel zur Erfassung von Deformationen aufweist, mit dem ersten und zweiten Teil mechanisch derart verbunden, dass auf den ersten und/oder zweiten Teil des Sensors wirkende Kräfte oder Momente in dem Abschnitt der Faser zu messbaren Deformationen transversal zur Längsachse der Faser führen. Beispielsweise kann die optische Faser an diesem Abschnitt mit dem ersten und zweiten Teil verklebt sein. Es sind auch andere Befestigungsverfahren bzw. -mittel möglich, wobei es aber vorteilhaft ist, wenn die Befestigung eine Übertragung von Druck- und Zugkräften in gleicher Weise ermöglicht.

Um die zu messenden Kräfte und/oder Momente in Spannungen in der Faser umzusetzen, ist eine Anbringung bzw. Anordnung bevorzugt, die bedingt, dass zwei senkrecht aufeinander stehende Kräfte zu zwei unterschiedlichen Dehnungen bzw. Spannungen in der Faser führen.

In einer bevorzugten Ausführungsform weist die optische Faser an mindestens einem weiteren Abschnitt, besonders bevorzugt an zwei weiteren Abschnitten, (je) ein weiteres Mittel zur Erfassung von Deformation(en) und/oder Spannung(en) der Faser transversal zu deren Längsachse auf. Dadurch wird insbesondere die Messung von Kraft- bzw. Momentkomponenten in mehreren Raumrichtungen ermöglicht. Dafür ist es notwendig, dass mindestens zwei der Faser-Abschnitte so angeordnet sind, dass deren Längsachsen einen Winkel einschließen. Dabei ist ein großer Winkel für eine hinreichende Auflösung bevorzugt. Beispielsweise sind Winkel von mindestens 45°, bevorzugt von etwa 60° und besonders bevorzugt von etwa 90°, vorgesehen. Bevorzugt liegen die Längsachsen der Abschnitte in einer Ebene.

Optional umfasst der Sensor ferner eine Lichtquelle und einen geeigneten optischen Detektor. Bevorzugt emittiert die Lichtquelle einen größeren Spektralbereich, insbesondere weißes Licht. Hierfür können beispielsweise Leuchtdioden, Superlumineszenzdioden oder verstimmbare Laser verwendet werden. Der Detektor ist vorzugsweise geeignet, eine Spektralanalyse durchzuführen, d.h. die Intensität unterschiedlicher Wellenlängen zu detektieren. Beispielsweise sind Spektrometer oder Fabry-Perot Interferometer geeignet.

Werden mehrere Abschnitte mit Mitteln zur Erfassung von Deformationen innerhalb derselben Faser bereitgestellt, ist es vorteilhaft, die einzelnen Mittel so auszulegen, dass sie im nichtdeformierten bzw. Ausgangs- oder ursprünglichen Zustand bereits Signale unterschiedlicher Signatur erzeugen, zum Beispiel, indem unterschiedliche Wellenlängenbereiche reflektiert werden. Dann ist es möglich, das aus einer Faser stammende und von einem Detektor detektierte Licht entsprechend seiner Signatur den einzelnen Mess-Abschnitten innerhalb der Faser zuzuordnen. Beispielsweise könnte ein erster Abschnitt Licht im blauen Wellenlängenbereich und ein zweiter Abschnitt Licht im grünen Wellenlängenbereich reflektieren. Deformationen im ersten Bereich führten dann zu Signalvariationen im blauen Licht, Deformationen im zweiten Bereich zu Variationen im grünen Licht.

Es ist ferner bevorzugt, dass der erste und/oder zweite Teil des Sensors im Bereich des/der Abschnitte(s), der/die das/die Mittel zur Erfassung von Deformationen und/oder Spannungen aufweist, (vorzugweise jeweils) eine Querdehnungsstruktur aufweist, die dazu geeignet ist, dass auf den ersten und/oder zweiten Teil des Sensors wirkende Kräfte und/oder Momente in dem Abschnitt der Faser zu messbaren Deformationen transversal zur Längsachse der Faser führen. Diese Querdehnungsstruktur weist dabei bevorzugt einen Versatz auf. Darüber hinaus ist es vorteilhaft, wenn die Querdehnungsstrukturen auf alternierenden Seiten der Abschnitte angebracht sind und/oder eine alternierende Symmetrie aufweisen.

Die vorliegende Erfindung betrifft ferner ein Verfahren zum Messen von Kräften und/oder Momenten. Demnach wird eine Faser mit mindestens einem Mittel zur Erfassung von Deformationen und/oder Spannungen der Faser transversal zu einer Längsachse der Faser bereitgestellt, in die Licht eingeleitet wird. Entsprechend dem Verfahren wirkt dann eine Kraft und/oder eine Moment auf die Faser, wobei mindestens eine Komponente der Kraft und/oder des Moments senkrecht zur Längsachse der Faser wirkt. Das in der Faser reflektierte Licht wird dann detektiert und das detektierte Spektrum analysiert. Vorzugsweise weist in dem Verfahren das Mittel zur Erfassung von Deformationen und/oder Spannungen der Faser ein Faser-Bragg-Gitter auf.

Das Verfahren ist bevorzugt dazu geeignet, dass aufeinander orthogonale Kräfte oder Momente transversal zur Längsachse der Faser unabhängig voneinander gemessen werden können.

Ferner können in einer bevorzugte Ausführungsform des Verfahrens durch Anordnen mehrerer Mittel zur Erfassung von Deformationen und/oder Spannungen in einer Ebene drei im Wesentlichen senkrecht aufeinander stehende Kraft- und/oder Momentkomponenten gemessen werden.

Nachfolgend werden bevorzugte Ausführungsformen des erfindungsgemäßen Sensors anhand der Figuren näher beschrieben. Es zeigen:
- Fig.: 1 einen. Schnitt durch einen Teil einer bevorzugten Ausführungsform des erfindungsgemäßen Sensors;
- Fig. 2: eine schematische Draufsicht auf einen Teil eines bevorzugten erfindungsgemäßen Sensors mit einer optischen Faser und vier Mitteln;
- Fig. 3: eine schematische Draufsicht auf einen Teil eines weiteren bevorzugten erfindungsgemäßen Sensors mit einer optischen Faser und vier Mitteln;
- Fig. 4: eine perspektivische Ansicht des in Fig. 3 dargestellten Teils;
- Fig. 5: eine perspektivische Ansicht eines erfindungsgemäßen Sensors, die einen ersten und zweiten Teil sowie eine optische Faser des Sensors zeigt;
- Fig. 6: eine perspektivische Ansicht eines ersten Teils einer alternativen Ausführungsform des erfindungsgemäßen Sensors;
- Fig. 7: eine Seitenansicht des ersten Teils aus Fig. 6 zusammen mit dem korrespondierenden zweiten Teil; und
- Fig. 8: eine Detailansicht des ersten Teils aus Fig. 6.

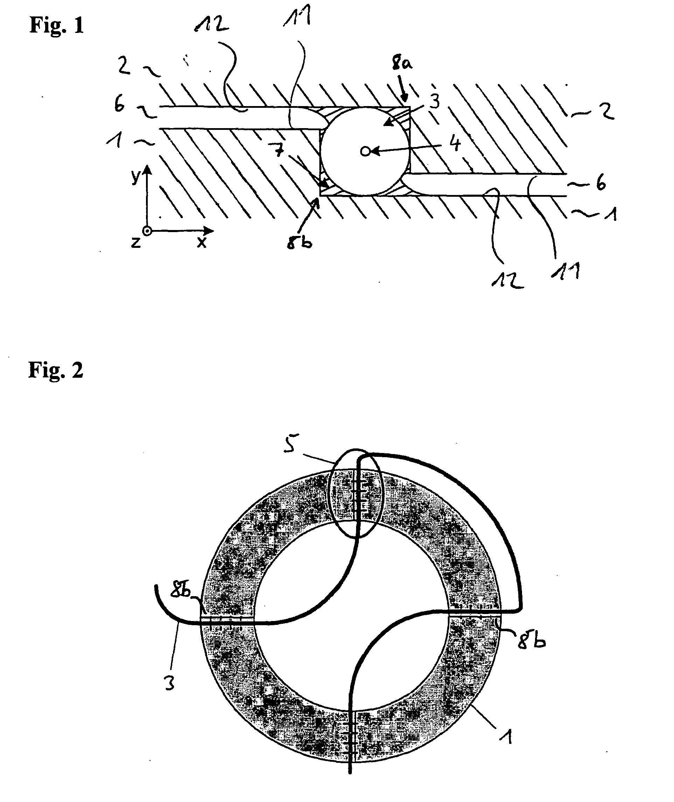

In Fig. 1 ist ein schematischer Schnitt durch einen Teil einer bevorzugten Ausführungsform des erfindungsgemäßen Sensors dargestellt. Eine optische Faser 3 mit einem Faserkern 4 ist zwischen einen ersten und zweiten Teil bzw. Trägerteil 1 und 2 aufweisend ein Trägermaterial eines erfindungsgemäßen Sensors angeordnet und vorzugsweise zwischen diesen eingebettet. Offensichtliche Anforderungen an das Trägermaterial sind Robustheit, mechanische Steifigkeit und leichte Bearbeitbarkeit. Vorteilhaft wäre demnach eine Fertigung zum Beispiel aus einem Metall oder einer Metall-Legierung oder einem Hartkunststoff. Bevorzugt sind Messing, Stahl oder Keramik.

Bevorzugt ist die Faser 3 dabei mittels einer Befestigung 7 mechanisch mit den beiden Teilen 1 und 2 des Sensors verbunden. Die Befestigung 7 kann beispielsweise darin bestehen, dass die Faser 3 in eine entsprechende Vertiefung oder Nut innerhalb der Teile 1 und 2 eingegossen wird. Vorteilhaft ist in diesem Zusammenhang auch die Verwendung eines geeigneten Klebstoffs, z.B. von Epoxy-Harzen. Da insbesodnere ein hoher E-Modul erforderlich ist, eignet sich beispielsweise auch Lötzinn oder ähnliche Lote, deren E-Modul typischerweise rund zehnmal so groß ist, wie das entsprechender Klebstoffe. Die Befestigung 7 kann aber auch ein elastisches Material aufweisen, so dass die optische Faser 3 zwischen den beiden Teilen 1 und 2 eingespannt bzw. eingepresst werden kann. Vorzugsweise wird eine dünne Bohrung als Führung für die Lichtleitfaser verwendet.

Die Erfindung beruht unter anderem auf der Idee, dass Querspannungen in Transversalrichtung, d.h. im Falle der Fig. 1 in Richtung x- und y-Achse, gemessen und vorzugsweise voneinander unterschieden werden können. Hierzu kann es von Vorteil sein, zusätzlich zu der beschriebenen Einbettung der Faser 3 eine geeignete Struktur und/oder Anordnung der (Träger-) Teile 1, 2 vorzusehen. So weist beispielsweise in der in Fig. 1 gezeigten Ausführungsform ein Spalt 6 zwischen erstem und zweitem Teil an der Position der Faser 3 einen Versatz auf. Dieser ist geeignet, die wirkenden Kräfte gezielt in die Faser 3 einzuleiten und so in bestimmte bzw. erwünschte Spannungsmuster innerhalb der Faser umzusetzen. Durch eine geeignete Positionierung und/oder Form des/r Spaltes/n 6 kann dabei insbesondere sichergestellt werden, dass Kräfte entlang der x- bzw. y-Achse (wie in Fig. 1 dargestellt) zu voneinander unterscheidbaren Spannungen bzw. Verformungen der Faser 3 führen. Durch die in Fig. 1 dargestellt Stufenstruktur werden transversale Dehnungen, so wie Gleitungen in die Faser eingekoppelt. So erzeugt eine Kraft in y-Richtung eine Stauchung der Faser in y-Richtung, durch die Querkontraktion jedoch eine Streckung in x-Richtung. Das gleiche gilt analog für eine Kraft in x-Richtung. Da über die Auswertung der Polarisation der transversale Dehnungszustand im Faserkern rekonstruiert werden kann, kann auch die transversale Kraftrichtung und deren Betrag ermittelt werden. Durch Kombination mehrerer derartiger Strukturen lassen sich zudem eine weitere Kraftrichtung bzw. Momente bestimmen.Alternativ ist eine integrierte optische Bauweise des Sensors bevorzugt. Hierzu wird der Wellenleiter direkt auf ein Substrat aufgebracht. Die Krafteinleitung wird dann über Gleitungen bzw. Schubspannungen zurückgerechnet. Die Wellenleiterführung entspricht dabei vorzugsweise der in Fig. 2 dargestellten. Es kannt dann auf die Kantenstruktur verzichtet werden. Die eingeleiteten Dehnungen sind dann wie erwähnt zum Teil Gleitungen, die optisch auch ausgewertet werden.

Alternativ und/oder zusätzlich ist die in Fig. 1 gezeigte Querdehnungsstruktur, d.h. eine Struktur die geeignet ist, die wirkenden Kräfte gezielt in die Faser 3 einzuleiten und so in bestimmte bzw. erwünschte messbare Spannungsmuster innerhalb der Faser umzusetzen, vorzugsweise so ausgebildet, dass der erste Teil 1 und der zweite Teil 2 des Sensors jeweils eine oder mehrere Kante(n) bzw. Absätze 8a, 8b aufweisen. Die beiden Teile 1 und 2 werden dann, wie in Fig. 1 angedeutet, so aneinander angeordnet oder miteinander verbunden, dass im wesentlichen zwei einander entsprechende Kanten 8a und 8b einen Raum bzw. Hohlraum zur Aufnahme der Faser 3 schaffen. Bevorzugt sind dabei die beiden Teile 1 und 2 so angeordnet, dass zumindest teilweise ein kontaktfreier Bereich 6 entsteht. Aufgrund der Anordnung der beiden Kanten 8a und 8b weist dieser kontaktfreie Bereich vorzugsweise einen Versatz bzw. eine Stufe auf. Vorzugsweise weisen die Teile 1 und 2 daher aufeinander Abgestimmte bzw. korrespondierend ausgeführte Seiten auf, die geeignet sind, mindestens ein Faser 3 mit mindestens einem Mittel 5 aufweisenden Abschnitt zwischen sich aufzunehmen. Hierzu weisen die entsprechenden Oberflächen der Teile 1 und 2 aufeinander abgestimmte Konturen bzw. Geometrien auf.

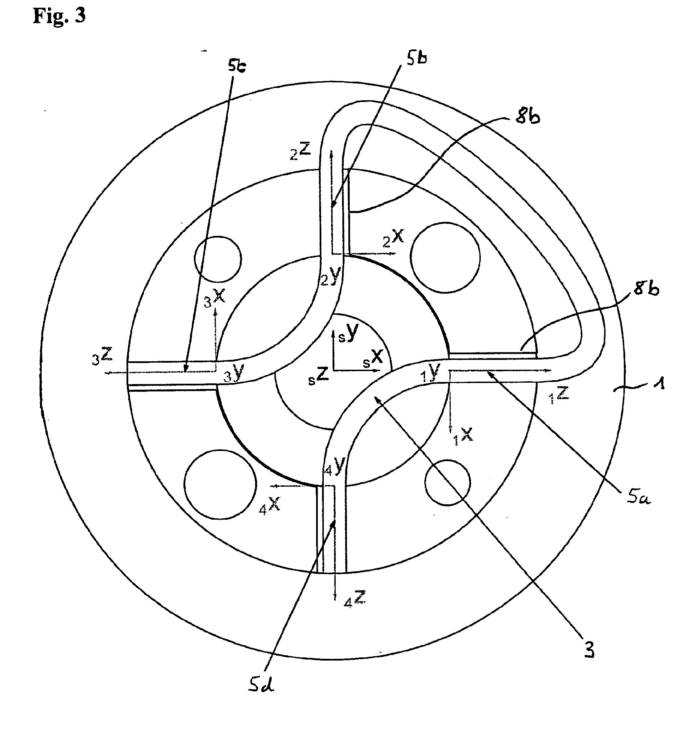

Fig. 2 und 3 zeigen eine schematische Draufsicht auf einen bevorzugten ersten Teil 1 eines erfindungsgemäßen Sensors zusammen mit einer optischen Faser 3 und vier Mitteln 5 bzw. 5a, 5b, 5c und 5d zur Erfassung von Deformationen und/oder Spannungen, hier vorzugsweise Faser-Bragg-Gittern. Der entsprechende zweite Teil 2 des Sensors ist nicht dargestellt. Da ein Mittel zur Erfassung von Deformationen und/oder Spannungen bzw. Faser-Bragg-Gitter zwei Dehnungskomponenten erfassen kann und man im allgemeinen an insgesamt sechs unabhängigen Größen interessiert ist, sollte der Sensor mindestens drei Mittel zur Erfassung von Deformationen und/oder Spannungen bzw. Faser-Bragg-Gitter umfassen. Weitere Mittel zur Erfassung von Deformationen und/oder Spannungen bzw. Gitter, wie im Beispiel der Fig. 2 und 3 ein viertes, können die Präzision der Messung erhöhen. So kann bevorzugt mittels eines vierten Gitters eine Temperatur oder ein Temperaturgradient innerhalb der Struktur kompensiert werden. Für spezielle Anwendungen kann es aber auch erwünscht sein, auf die Messung bestimmter Komponenten zu verzichten. In dem Fall wird der Sensor nur ein oder zwei Mittel zur Erfassung von Deformationen und/oder Spannungen bzw. Gitter aufweisen.

Nachfolgend wird lediglich auf die bevorzugte Verwendung von Faser-Bragg-Gittern als Mittel zur Erfassung von Deformationen und/oder Spannungen Bezug genommen. Es versteht sich jedoch, dass auch andere geeignete Mittel bevorzugt verwendet werden.

Dem Fachmann wird dabei klar sein, dass die Faser-Bragg-Gitter bei Verwendung von drei Gittern so angeordnet sein müssen, dass Kraft- bzw. Moment-Kompomenten in allen drei Raumrichtungen gemessen werden können. Vorteilhaft ist dafür zum Beispiel eine Anordnung auf zwei zueinander senkrechten bzw. im Wesentlichen senkrechten Achsen, wie in Fig. 2 und 3 dargestellt. Im Falle von nur drei Gittern ist beispielsweise eine symmetrische Anordnung mit jeweils 120° zwischen den Gittern vorstellbar. Die Achse senkrecht zur Zeichenebene (Fig. 2, 3) muss dabei wie bereits ausgeführt nicht bedient werden, da jedes Gitter zwei Mess-Richtungen bereitstellt, wovon eine vorteilhafter Weise eben senkrecht zur Zeichenebene weist. Vorzugsweise werden die Fasern bzw. die die Mittel zur Erfassung von Deformationen und/oder Spannungen aufweisenden Abschnitte der Faser(n) mit ihrer Längsachse in im Wesentlichen radialer Richtung zueinander ausgerichtet angeordnet. Vorzugsweise ist/sind die Faser(n) bzw. die Abschnitte im Wesentlichen in einer Ebene angeordnet.

Entsprechend der Anordnung der Faser-Bragg-Gitter bzw. der Mittel zur Erfassung von Deformationen und/oder Spannungen sind vorzugsweise die jeweiligen Querdehnungsstrukturen, d.h. also z.B. der Kanten 6 gemäß dieser Anordnung in den beiden Teilen 1 und 2 vorgesehen. Bei der in Fig. 2 dargestellten bevorzugten Ausführungsform sind dabei die Kanten 8b des ersten Teils 1 auf jeweils alternierenden Seiten der Faser-Abschnitte angebracht. Entsprechendes gilt auch für die Kanten 8a des zweiten Teils. Mit anderen Worten weisen die Querdehnungsstrukturen bevorzugt eine alternierende Symmetrie auf.

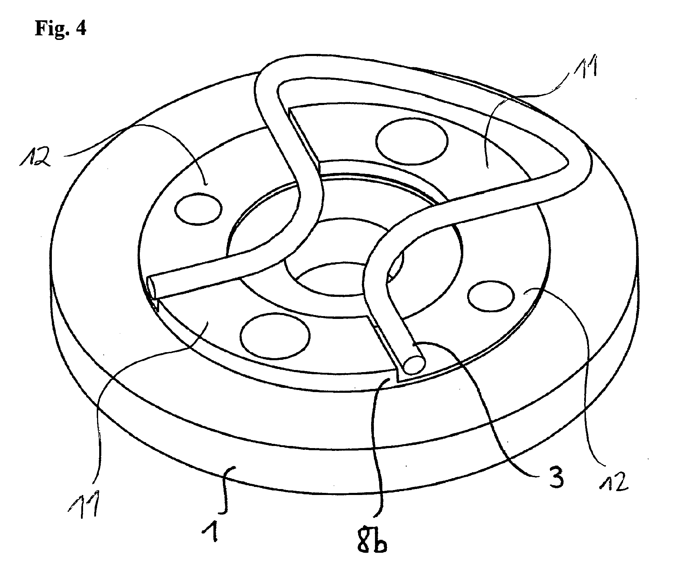

Eine weitere Ausführungsform der Kanten ist in Fig. 3 zu sehen. Die in Fig. 4 dargestellte entsprechende perspektivische Darstellung zeigt die dreidimensionale Struktur der Kanten 8b noch deutlicher.

Es sollte sich von selbst verstehen, dass nicht nur die Anordnung der Gitter und/oder Querdehnungsmittel, sondern auch die gesamte geometrische Ausgestaltung der in Fig. 2 und 3 abgebildeten Ausführungsformen beispielhaft aufzufassen ist. Es ist auch eine rechteckige, quadratische, dreieckige oder beliebige sonstige Grundstruktur vorstellbar. Ebenso lässt sich die Führung der optischen Faser 3 wunschgemäß anpassen, ohne von der Erfindung abzuweichen. Es ist auch eine Ausführungsform mit mehreren Fasern und/oder einer dreidimensionalen Anordnung der Gitter bevorzugt.

Als Faser können herkömmliche, handelsübliche optische Fasern verwendet werden. Je nach Anordnung kann es dabei vorteilhaft sein, wenn die verwendete Faser einen kleinen zulässigen Krümmungsradius aufweist. Ferner ist es zweckdienlich eine polarisationserhaltende Faser zu verwenden, um die Auswertung des detektierten Signals zu erleichtern. Besonders geeignet sind Fasern, deren optische Eigenschaften sich unter Deformation bzw. Spannung stark verändern, zum Beispiel Polymerfaser oder auf Polymerbasis hergestellte Fasern sowie für Anwendungen mit hoher Temperatur insbesondere Saphirfasern.

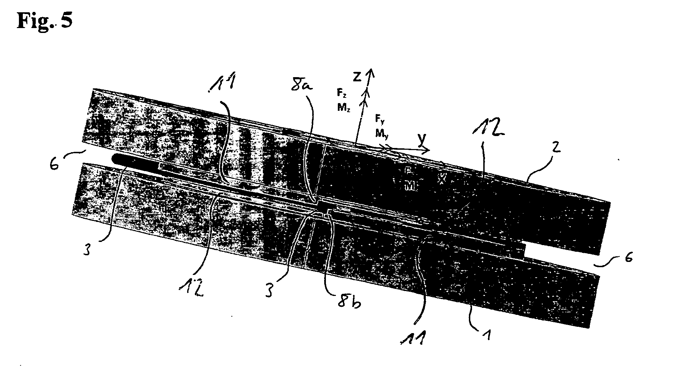

In Fig. 5 ist ein bevorzugter fertig montierter erfindungsgemäßer Sensor gezeigt, bei dem der erste Teil 1 und der zweite Teil 2 die optische Faser 3 zumindest in den Abschnitten fest umschließen. In einer bevorzugten Ausführungsform sind die beiden Teile im wesentlichen nur über die optische Faser 3 bzw. das sie umgebende Verbindungs- oder Befestigungsmaterial 7 miteinander verbunden, während die beiden Teile ansonsten mittels eines Spaltes 6, beispielsweise des in Fig. 1 oder Fig. 5 dargestellten, voneinander getrennt sind. Dadurch wird gewährleistet, dass sämtliche zwischen den beiden Teilen auftretenden Kräfte bzw. Momente auf die optische Faser 3 übertragen werden und dort zu entsprechenden Deformationen bzw. Spannungen führen.

Alternativ ist es aber auch möglich, dass die beiden Teile zusätzliche Verbindungselemente aufweisen, um etwa eine größere Stabilität zu erzielen. Diese Verbindungselemente sollten aber vorzugsweise elastisch sein, so dass zumindest ein Teil der auftretenden Kräfte bzw. Momente trotz dieser Verbindungen auf die optische Faser übertragen wird.

In der bevorzugten Ausführungsform gemäß Fig. 2 und 3 weist Teil 1, und vorzugsweise entsprechend auch Teil 2 (nicht dargestellt), vier Querdehnungsstrukturen 8 auf, die vorzugsweise um jeweils 90° versetzt zueinander angeordnet sind und weiterhin bevorzugt in etwa in einer Ebene liegen. Somit liegen jeweils zwei Querdehnungsstrukturen 8 (8a, 8b) beabstandet voneinander in die gleiche Richtung entlang der Faser orientiert. Vorzugsweise sind jeweils zwei der in die im Wesentlichen gleiche Richtung entlang der Faser orientierten Querdehnungsstrukturen 8 (8a, 8b) auf unterschiedlichen bzw. gegenüberliegenden Seiten der Faser angeordnet. Vorzugsweise sind die vier um jeweils 90° versetzten Querdehnungsstrukturen 8 im oder gegen den Urzeigersinn gesehen abwechselnd auf jeweils der anderen Seite der Faser 3 angeordnet.

Die Außenseiten der Teile 1 und 2 weisen optional zusätzliche Befestigungselemente für die entsprechende Anwendung auf. So können beispielsweise Gewinde, Bohrungen, Zapfen, Nuten, Flansche oder ähnliche Einrichtungen vorgesehen sein, um den erfindungsgemäßen Sensor mit weiteren Geräten oder Vorrichtungen zu verbinden oder ihn an diesen zu befestigen. Natürlich kann der Sensor wie oben beschrieben zusätzlich eine nicht dargestellte Lichtquelle und einen entsprechenden Detektor umfassen. Ferner kann eine Steuerungseinheit, etwa ein entsprechend programmierter PC, vorgesehen sein, der die einzelnen Komponenten ansteuert und die detektierten Signale auswertet, d.h. aus dem gemessenen Spektrum die Kräfte bzw. Momente berechnet.

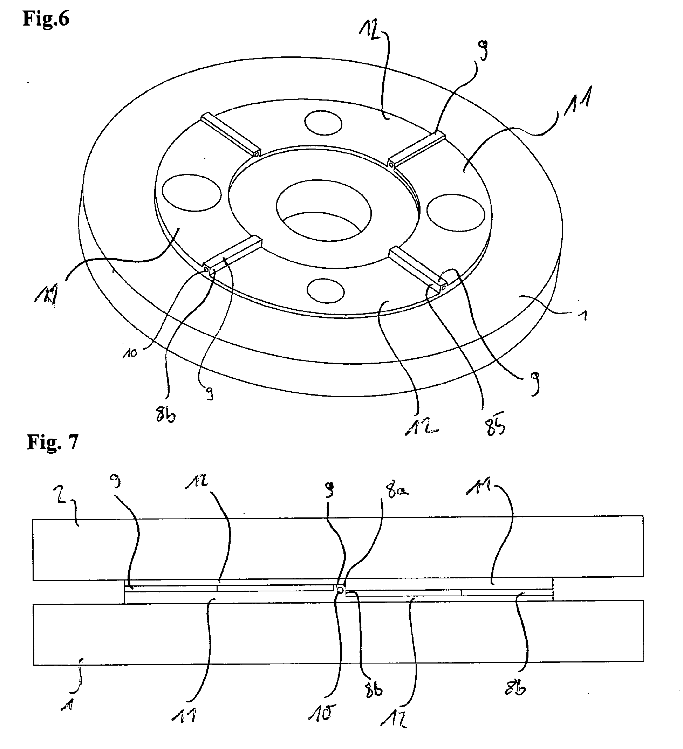

Fig. 6 zeigt eine perspektivische Ansicht eines ersten Teils einer weiteren bevorzugten Ausführungsform eines erfindungsgemäßen Sensors. Hier weis die zuvor beschriebene Querdehnungsstruktur 8 Rippen oder Leisten 9 auf, mit jeweils einer Führungsbohrung bzw. - öffnung 10, in die die optische Faser 3 eingeführt werden kann. Fig. 7 stellt einen entsprechenden Sensor aus erstem und zweiten Teil in der Seitenansicht dar.

Hier ist besonders deutlich zu sehen, dass bevorzugt im Bereich der Rippe oder Leiste 9 ein Versatz bzw. eine Kante 8b vorgesehen ist. Ähnlich der zuvor diskutierten Ausführungsform weist der zweite Teil 2 des Sensors bevorzugt entsprechende Kanten 8a auf, die im Eingriff mit den Rippen 9 eine Querdehnungsstruktur bilden. Vorzugsweise entspricht die Ausbildung der Kanten 8a und 8b in dieser Bevorzugten Ausführungsform der der voranstehend beschriebenen Ausführungsformen, wobei der durch zwei entsprechende Kanten gebildete Raum bzw. Hohlraum durch die Rippe bzw. Leiste 9 zur Aufnahme der Faser 3 ausgefüllt ist.

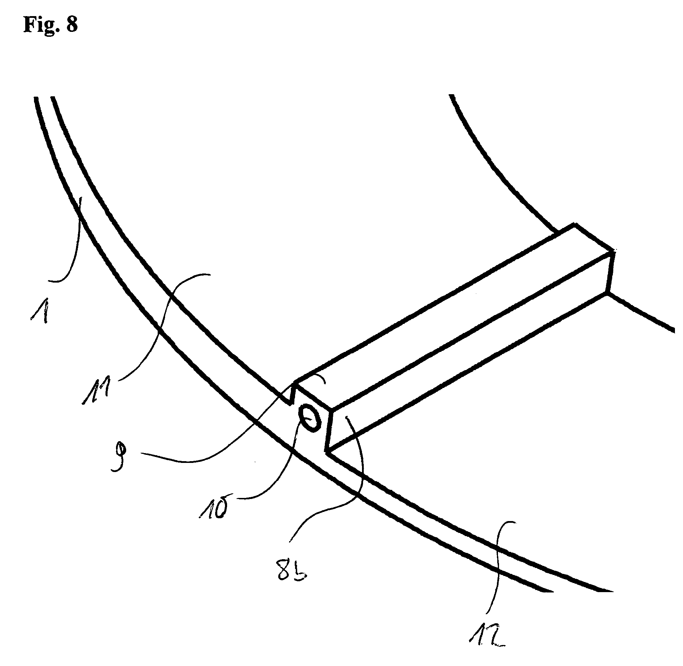

Wie auch u.a. in Fig. 4 zu sehen, weist das Teil 1 vorzugsweise einen erhöhten Bereich 11 auf, der gegenüber einem vertieften bzw. zurückgesetzten Bereich 12 eine Kante 8b ausbildet. Vorzugsweise sind erhöhte 11 und diesen gegenüber vertiefte 12 Bereiche in etwa Kreisförmig alternierend angeordnet, so dass ein erhöhter Bereich 11 zusammen mit zwei vertieften Bereichen 12 zwei Kanten 8b ausbildet bzw. wobei ein vertiefter Bereich 12 zusammen mit zwei erhöhten Bereichen 11 zwei Kanten 8b ausbildet. Dieser Aufbau ist auch vorzugsweise in der Ausführungsform gemäß Fig. 1 bis 7 vorhanden, wie den Fig. zu entnehmen ist. Im Bereich der Kanten, also am Übergang von einem erhöhten 11 zu einem vertieften Bereich 12, ist in der Ausführungsform nach Fig. 6 bis 8 eine Rippe 9 ausgebildet. Dies ist auch der Detailansicht gemäß Fig. 8 zu entnehmen.

In einer bevorzugten Ausführungsform wird die Faser, die einen geringen Durchmesser von vorzugsweise etwa 70 bis 90 µm und bevorzugt etwa 80 µm hat, zunächst mit einem Kupfermantel von vorzugsweise etwa 40 bis 60 µm und bevorzugt 50 µm Dicke verkupfert. Anschließend wird die verkupferte Faser in die Spalte oder die gebohrten Führungslöcher eingefädelt, erhitzt und dann durch Zugeben von Lötzinn mit dem Führungsloch verlötet. Ein erfindungsgemäßer Sensor hat vorzugsweise einen Durchmesser von etwa 10 bis 30 mm und bevorzugt von etwa 20 mm.

Der erfindungsgemäße Sensor hat mehrere Vorteile gegenüber herkömmlichen Sensoren. Zum einen lässt er sich relativ einfach und kostengünstig mit bereits bekannten Standardverfahren herstellen. Seine Konstruktion ist im Vergleich zu herkömmlichen Sensoren einfach und robust. So lässt er sich beispielsweise deutlich steifer ausgestalten als bereits bekannte Sensoren. Dennoch ermöglicht er Messungen von großer Präzision. Ein besonderer Vorteil ist seine kleine Größe und/oder flächige Ausführung: Da die einzelnen Sensorelemente in einer Ebene angeordnet sein und gleichzeitig relativ dünn ausgeführt werden können, wird ein Sensor bereitgestellt, der in einer Dimension deutlich reduziert Ausmaße gegenüber üblichen Sensoren besitzt. Dennoch kann der erfindungsgemäße Sensor Kräfte und Momente senkrecht zu seiner flächigen Form detektieren. Eine deutliche Erstreckung der räumlichen Anordnung in Richtung der zu messenden Kraft ist insbesondere nicht erforderlich. Damit ist der erfindungsgemäße Sensor flexibel einsetzbar und für spezielle Anwendungen mit hohen Anforderungen an Miniaturisierung geeignet.

## Patentansprüche

1. Kraft-Momenten-Sensor zum Messen von mindestens einer Kraft und/oder einem Moment mit einem ersten Teil (1), einem zweiten Teil (2) und einer dazwischen angeordneten optischen Faser (3) mit einer Längsachse, wobei die Faser (3) an mindestens einem Abschnitt ein Mittel (5) zur Erfassung von Deformationen und/oder Spannungen der Faser (3) transversal zu deren Längsachse aufweist.

2. Sensor gemäß Anspruch 1, wobei das Mittel (5) zur Erfassung von Deformationen und/oder Spannungen der Faser (3) dazu geeignet ist, aufeinander orthogonale Kräfte oder Momente transversal zur Längsachse der Faser (3) unabhängig voneinander zu messen.

3. Sensor gemäß Anspruch 1 oder 2, wobei das Mittel (5) zur Erfassung von Deformationen und/oder Spannungen der Faser (3) ein Faser-Bragg-Gitter aufweist.

4. Sensor gemäß einem der vorstehenden Ansprüche, wobei der Abschnitt, der das Mittel (5) zur Erfassung von Deformationen und/oder Spannungen aufweist, zumindest teilweise mit dem ersten und zweiten Teil (1, 2) derart mechanisch verbunden ist, dass auf den ersten und/oder zweiten Teil (1, 2) des Sensors wirkende Kräfte oder Momente in dem Abschnitt der Faser (3) zu messbaren Deformationen transversal zur Längsachse der Faser (3) führen.

5. Sensor gemäß einem der vorstehenden Ansprüche, wobei die optische Faser (3) an mindestens einem weiteren Abschnitt ein Mittel (5) zur Erfassung von Deformationen und/oder Spannungen der Faser (3) transversal zu deren Längsachse aufweist.

6. Sensor gemäß einem der vorstehenden Ansprüche, wobei die optische Faser (3) an vorzugsweise zwei, drei, vier oder mehr Abschnitten ein Mittel (5) zur Erfassung von Deformationen und/oder Spannungen der Faser (3) transversal zu deren Längsachse aufweist.

7. Sensor gemäß Anspruch 5 oder 6, wobei mindestens zwei der Faser-Abschnitte so angeordnet sind, dass deren Längsachsen einen Winkel von mindestens 60° einschließen.

8. Sensor gemäß Anspruch 7, wobei mindestens zwei der Faser-Abschnitte so angeordnet sind, dass deren Längsachsen orthogonal zueinander sind.

9. Sensor gemäß einem der Ansprüche 5 bis 8, wobei die Faser-Abschnitte so angeordnet sind, dass deren Längsachsen in einer Ebene liegen.

10. Sensor gemäß einem der vorstehenden Ansprüche, wobei die optische Faser (3) polarisationserhaltend ist.

11. Sensor gemäß einem der vorstehenden Ansprüche, wobei der Sensor ferner eine Lichtquelle und einen optischen Detektor umfasst.

12. Sensor gemäß einem der Ansprüche 5 bis 11, wobei die Mittel (5) zur Erfassung von Deformationen und/oder Spannungen dazu geeignet sind, Signale unterschiedlicher Signatur zu erzeugen.

13. Sensor gemäß einem der vorstehenden Ansprüche, wobei der erste und/oder zweite Teil im Bereich des/der Abschnitte(s), der/die das/die Mittel (5) zur Erfassung von Deformationen und/oder Spannungen aufweist, eine Querdehnungsstruktur (8) aufweist, die dazu geeignet ist, dass auf den ersten und/oder zweiten Teil (1, 2) des Sensors wirkende Kräfte und/oder Momente in dem Abschnitt der Faser (3) zu messbaren Deformationen transversal zur Längsachse der Faser (3) führen.

14. Sensor gemäß Anspruch 13, wobei die Querdehnungsstruktur (8) einen Versatz aufweist.

15. Sensor gemäß Anspruch 13 oder 14, wobei die Querdehnungsstrukturen (8) auf alternierenden Seiten der Abschnitte angebracht sind und/oder eine alternierende Symmetrie aufweisen.

16. Sensor gemäß einem der Ansprüche 13 bis 15, wobei die Querdehnungsstrukturen (8) Rippen (9) aufweisen.

17. Verfahren zum Messen von Kräften und/oder Momenten mit den folgenden Schritten:
a) Bereitstellen einer Faser (3) mit mindestens einem Mittel (5) zur Erfassung von Deformationen und/oder Spannungen der Faser (3) transversal zu einer Längsachse der Faser (3);
b) Einleiten von Licht in die Faser(3);
c) Einwirken einer Kraft und/oder eines Moments auf die Faser (3), wobei mindestens eine Komponente der Kraft und/oder des Moments senkrecht zur Längsachse der Faser (3) wirkt;
d) Detektieren des in der Faser (3) reflektierten Lichts; und
e) Analysieren des detektierten Spektrums.

18. Verfahren gemäß Anspruch 17, wobei das Mittel (5) zur Erfassung von Deformationen und/oder Spannungen der Faser (3) ein Faser-Bragg-Gitter aufweist.

19. Verfahren gemäß Anspruch 17 oder 18, wobei aufeinander orthogonale Kräfte oder Momente transversal zur Längsachse der Faser (3) unabhängig voneinander gemessen werden können.

20. Verfahren gemäß einem der Ansprüche 17 bis 19, wobei durch Anordnen mehrerer Mittel (5) zur Erfassung von Deformationen und/oder Spannungen in einer Ebene drei im Wesentlichen senkrecht aufeinander stehende Kraft- und/oder Momentkomponenten gemessen werden können.
